(19) Europäisches Patentamt
European Patent Office
Office européen des brevets

(11) **EP 4 597 900 A1**

(12) **EUROPEAN PATENT APPLICATION**
published in accordance with Art. 153(4) EPC

(43) Date of publication:
**06.08.2025 Bulletin 2025/32**

(21) Application number: **23870992.7**

(22) Date of filing: **28.09.2023**

(51) International Patent Classification (IPC):
**H04L 5/00** $^{(2006.01)}$

(52) Cooperative Patent Classification (CPC):
**H04L 5/00; H04W 72/0453; H04W 72/53**

(86) International application number:
**PCT/CN2023/122423**

(87) International publication number:
**WO 2024/067767 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 CN 202211194910**

(71) Applicant: **Sharp Kabushiki Kaisha
Sakai City, Osaka 590-8522 (JP)**

(72) Inventors:
• **ZHAO, Yinan
Shanghai 201206 (CN)**
• **LIU, Renmao
Shanghai 201206 (CN)**
• **LUO, Chao
Shanghai 201206 (CN)**

(74) Representative: **Müller Hoffmann & Partner
Patentanwälte mbB
St.-Martin-Strasse 64
81541 München (DE)**

(54) **METHOD EXECUTED BY USER EQUIPMENT, AND USER EQUIPMENT**

(57)     Provided in the present invention are a method performed by a user equipment, and a user equipment. The method performed by a user equipment includes: receiving SCI, and determining COT sharing information indicated in the SCI, wherein frequency-domain information in the COT sharing information includes one or more RB sets corresponding to a shared COT, wherein the one or more RB sets are one or more RB sets in which a frequency-domain resource allocated for a PSSCH associated with the SCI is located.

```
┌─────────────────────────────────────┐
│                                     │
│     Determine a TBS of a TB         │ ⟶ S101
│                                     │
└─────────────────────────────────────┘
                   │
                   ▼
┌─────────────────────────────────────┐
│                                     │
│  Perform one or more operations     │ ⟶ S103
│  related to the TB                  │
│                                     │
└─────────────────────────────────────┘
```

**FIG. 1**

EP 4 597 900 A1

**Description**

**TECHNICAL FIELD**

The present invention relates to a method performed by a user equipment, and a user equipment.

**BACKGROUND ART**

In a wireless communication system, information may be exchanged between different communication nodes. Wireless communication may be performed on a licensed spectrum and/or on an unlicensed spectrum. One example of a wireless communication system is a system standardized by the 3rd Generation Partnership Project (3GPP), for example, a 4G system based on Long-Term Evolution (LTE) radio access technology or an evolved system thereof, or a 5G system based on New Radio (NR) radio access technology or an evolved system thereof. In a communication system based on 3GPP specifications, examples of the communication nodes may include a user equipment (UE) and a base station (e.g., an eNB or a gNB). A radio link from a base station to a UE may be referred to as a downlink (DL). A radio link from a UE to a base station may be referred to as an uplink (UL). A radio link between UEs may be referred to as a sidelink (SL). An interface for wireless transmission and/or reception between a base station and a UE may be referred to as a Uu interface (e.g., an NR-Uu interface based on NR, or an LTE-Uu interface based on LTE). An interface for wireless transmission and/or reception between UEs may be referred to as a PC5 interface.

In order to support communication on a licensed spectrum and/or an unlicensed spectrum, a series of issues need to be addressed, such as channel access mechanisms, physical layer channel and/or signal structures, physical layer control information and/or signaling procedures (e.g., a synchronization procedure and a feedback and/or determination mechanism), control information and/or signaling procedures of a higher layer, resource allocation and/or management, and coexistence among different systems.

Prior Art Documents

Non-Patent Documents

Non-Patent Document 1: RP-152293, New WI proposal: Support for V2V services based on LTE sidelink, 3GPP TSG RAN Meeting#70
Non-Patent Document 2: RP-170798, New WID on 3GPP V2X Phase 2, 3GPP TSG RAN Meeting#75
Non-Patent Document 3: RP-170855, New WID on New Radio Access Technology, 3GPP TSG RAN Meeting#75
Non-Patent Document 4: RP-190766, New WID on 5G V2X with NR sidelink, 3GPP TSG RAN Meeting#83
Non-Patent Document 5: RP-201385, WID revision: NR sidelink enhancement, 3GPP TSG RAN Meeting#88e
Non-Patent Document 6: RP-221938, Revised WID on NR sidelink evolution, 3GPP TSG RAN Meeting#97e

**SUMMARY OF THE INVENTION**

In order to address at least part of the aforementioned issues, the present invention provides a method performed by a user equipment (UE) and a UE, enabling the UE, when determining spectrum information of a shared COT, to determine frequency-domain information of the shared COT according to frequency-domain resource allocation corresponding to a PSSCH associated with SCI indicating the shared COT, thereby reducing the size of COT sharing information and improving the efficiency of channel access and resource sharing in the case of COT sharing.

According to the present invention, a method performed by a user equipment is provided. The method is characterized by comprising: receiving SCI, and determining COT sharing information indicated in the SCI, wherein frequency-domain information in the COT sharing information comprises one or more RB sets corresponding to a shared COT, wherein the one or more RB sets are one or more RB sets in which a frequency-domain resource allocated for a PSSCH associated with the SCI is located.

Furthermore, according to the present invention, provided is a user equipment, comprising: a processor; and a memory storing instructions, wherein the instructions, when run by the processor, perform the above method.

Therefore, the present invention provides a method, enabling a UE, when determining spectrum information of a shared COT, to determine frequency-domain information of the shared COT according to frequency-domain resource allocation corresponding to a PSSCH associated with SCI indicating the shared COT, thereby reducing the size of COT sharing information and improving the efficiency of channel access and resource sharing in the case of COT sharing.

## BRIEF DESCRIPTION OF THE DRAWINGS

The above and other features of the present invention will be more apparent from the following detailed description in combination with the accompanying drawings, in which:

FIG. 1 shows a flowchart corresponding to a method performed by a user equipment according to Embodiment 1 of the present invention.
FIG. 2 shows a flowchart corresponding to a method performed by a user equipment according to Embodiment 2 of the present invention.
FIG. 3 shows a flowchart corresponding to a method performed by a user equipment according to Embodiment 3 of the present invention.
FIG. 4 shows a block diagram of a user equipment according to the present invention.

## DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

A plurality of embodiments according to the present invention are specifically described below using 5G (or referred to as NR or 5GNR) wireless communication system specifications formulated by the 3GPP and subsequent evolved versions thereof (e.g., 5G Advanced) as an exemplary application environment. However, it is to be noted that the present invention is not limited to the following embodiments, but is applicable to many other wireless communication systems, such as wireless communication systems later than 5G, or 4G mobile communication systems earlier than 5G, e.g., Long Term Evolution (LTE), LTE-Advanced, LTE-Advanced Pro, etc.

The terms given in the present invention may be named differently in different wireless communication systems, but unified terms are used in the present invention. When applied to a specific system, the terms may be replaced with terms used in the corresponding system.

Unless otherwise specified, in all embodiments and implementations of the present invention:

- A "node" (or "communication node") may be a UE or a network node (e.g., a base station).
- A "base station" may be an E-UTRAN NodeB (eNB, wherein E-UTRAN stands for Evolved Universal Terrestrial Radio Access Network), or a gNB (a node that provides NR user plane and control plane protocol terminations to a UE and is connected to a 5G core network via an NG interface), or an ng-eNB (a node that provides E-UTRA user plane and control plane protocol terminations to a UE and is connected to a 5G core network via an NG interface, wherein E-UTRA stands for Evolved Universal Terrestrial Radio Access).
- "Higher layer(s)" or "upper layer(s)" may refer to, in a specific protocol stack, one or more protocol layers or protocol sub-layers above a reference protocol layer or a reference protocol sub-layer. For example, if the reference protocol layer or the reference protocol sub-layer is a physical layer, the "higher layer" may refer to a Medium Access Control (MAC) layer, and/or a Radio Link Control (RLC) layer, and/or a Packet Data Convergence Protocol (PDCP) layer, and/or a PC5 Radio Resource Control (RRC) layer, and/or a PC5-S layer, and/or an RRC layer, and/or another protocol layer or protocol sub-layer. Unless otherwise specified, the reference protocol layer or the reference protocol sub-layer is a physical layer. A "higher layer" may also be referred to as a "high layer" if this causes no ambiguity.
- "Configure" may mean that in a communication node (e.g., a UE), a protocol layer (e.g., RRC layer) entity provides configuration information to another protocol layer (e.g., physical layer) entity.
- "Configuration" may mean that a protocol layer (e.g., an RRC layer) entity of a communication node (e.g., a base station) provides configuration information to a peer protocol layer entity of another communication node (e.g., a UE) (for example, RRC signaling is transmitted from the base station to the UE, wherein the configuration information is included, and as another example, PC5-RRC signaling is transmitted from UE-A to UE-B, wherein the configuration information is included).
- "Pre-configure" may mean that corresponding configuration information is preset in a specific storage location in a communication node (e.g., a UE), or corresponding configuration information is preset in a specific storage location accessible by the UE.
- "Configure" may refer to "configure or pre-configure".
- "Number" may refer to "total number". For example, "the number of subchannels in a resource pool" may refer to the total number of subchannels in the resource pool.
- $\mu$ may represent a subcarrier spacing configuration, such as $\mu = 0$, and $\Delta f$ may represent a corresponding subcarrier spacing (SCS), e.g., $\mu = 0$ corresponding to $\Delta f = 15$ *kHz*.

- "Symbol" may refer to an orthogonal frequency division multiplexing (OFDM) symbol.
- One resource may correspond to one or more of the following:

   - One or more parameters in the time-domain. For example, a starting symbol of the resource, a starting slot of the resource, the number of symbols occupied by the resource, or the number of slots occupied by the resource.
   - One or more parameters in the frequency-domain. For example, a starting subchannel of the resource, a starting resource block (RB) of the resource, a starting subcarrier of the resource, the number of sub-channels occupied by the resource, the number of RBs occupied by the resource, or the number of subcarriers occupied by the resource.
   - One or more parameters in the code-domain. For example, a cyclic shift value corresponding to the resource or a corresponding cyclic shift index. As another example, a cyclic shift pair value corresponding to the resource or a corresponding cyclic shift pair index.
   - One or more parameters in the spatial-domain. For example, a layer corresponding to the resource, where a "layer" may refer to a multiple input multiple output (MIMO) layer.

- A "layer" may refer to one of one or more layers to which a transport block (TB) is mapped in spatial multiplexing. The mapping may also be considered as a mapping of a codeword corresponding to the TB to the one or more layers.
- An "RB" may refer to a physical resource block (PRB), a virtual resource block (VRB), a common resource block (CRB), or an interlaced resource block (IRB).
- "Number" and "index" are interchangeable. For example, the number of an RB may also be referred to as the index of the RB. As another example, "numbering an RB as 0" may also be expressed as "indexing an RB as 0".
- An RB represented by a CRB number may also be represented by a corresponding PRB number, and vice versa.
- The numbering of elements in a sequence (or an array, or a list, or an ordered set, or the like) may start from 0. For example, the first RB of an RB set may be referred to as RB 0 of the RB set.
- An object (e.g., a subcarrier, a slot, a cyclic shift, etc.) may be represented by the index thereof. For example, a CRB numbered as 0 may be referred to as CRB 0.
- If a corresponding number is not specified when an object is mentioned, the number of the object may be one or multiple. For example, in the expression "performing transmission on a channel", the "transmission(s)" may correspond to one transmission, or a plurality of transmissions.
- $\Delta(x_1, x_2)$ may represent an offset between $x_1$ and $x_2$, where $x_1$ and $x_2$ may be two parameters (or variables) that can be compared, or two possible values of one parameter (or variable) (e.g., $x_1$ and $x_2$ may be two slots, or two sub-frames, or two frames, or two subcarriers, or two RBs, or two sub-channels, etc.).
- $\Delta(x_1, x_2)$ may be equal to $x_2 - x_1$. For example, a CRB set is denoted as $A_{CRB}^{ref} = \{a_0^{ref}, a_1^{ref}, a_2^{ref}, a_3^{ref}, a_4^{ref}\}$, where $a_0^{ref} = 5$, $a_1^{ref} = 15$, $a_2^{ref} = 25$, $a_3^{ref} = 35$, $a_4^{ref} = 45$, $x_1 = a_0^{ref}$, and $x_2 = a_3^{ref}$, so that $\Delta(x_1, x_2)$ may be equal to $a_3^{ref} - a_0^{ref} = 35 - 5 = 30$.
- $\Delta(x_1, x_2)$ may be equal to $idx(x_2) - idx(x_1)$, where $idx(x_1)$ and $idx(x_2)$ are indexes of elements corresponding to $x_1$ and $x_2$ in a same set, respectively. For example, the CRB set is denoted as $A_{CRB}^{ref} = \{a_0^{ref}, a_1^{ref}, a_2^{ref}, a_3^{ref}, a_4^{ref}\}$, where $a_0^{ref} = 5$, $a_1^{ref} = 15$, $a_2^{ref} = 25$, $a_3^{ref} = 35$, $a_4^{ref} = 45$, $x_1 = a_0^{ref}$, and $x_2 = a_3^{ref}$, so that $\Delta(x_1, x_2)$ may be equal to 3 - 0 = 3.
- An "offset between $x_1$ and $x_2$" may also be referred to as an offset of $x_2$ with respect to $x_1$ or an offset of $x_2$ relative to $x_1$.
- An "offset between $x_1$ and $x_2$" may also be referred to as an offset from $x_1$ to $x_2$.
- If $\Delta(x_1, x_2) = D$, $x_2$ may be denoted as $x_2 = ADD(x_1, D)$.
- If $\Delta(x_1, x_2) = D$, $x_1$ may be denoted as $x_1 = SUBTRACT(x_2, D)$.
- An offset between two subcarriers may refer to an offset between center frequencies of the two subcarriers.
- A modulo operation may be defined as $r \equiv a \bmod N$, where

   - $r$ is a remainder.
   - $a = N \times q + r$, where $q = \lfloor a/N \rfloor$. $q$ may be referred to as an integer quotient of $a$ and $N$.
   - 

$$0 \le r < |N|.$$

- A round operation may be denoted as b = round (*a*), where b may be defined as the integer closest to *a*. If there are two integers closest to *a*, b may be defined as the larger of the two integers, or as the smaller of the two integers.
- Sidelink control information (SCI) may refer to 1st-stage SCI and/or 2nd-stage SCI.
- An "SL slot" may refer to a slot in which an SL resource is configured or pre-configured. The "SL resource" may or may not include a resource for a specific purpose. The "resource for a specific purpose" may be a resource for a synchronization procedure, for example, a resource for transmitting an S-SS/Physical Sidelink Broadcast Channel or Sidelink-Synchronization Signal/Physical Sidelink Broadcast Channel (S-SS/PSBCH) block.
- A "physical slot" may refer to a slot belonging to a certain physical slot set, where the physical slot set may be all slots in a continuous period of time (e.g., a frame period having a duration of 1024 frames). Physical slots in the physical slot set may be sequentially numbered as 0, 1, ... in chronological order.
- A "logical slot" may refer to a slot belonging to a slot set of a certain SL resource pool, where the slot set may be all slots belonging to the SL resource pool in a continuous period of time (e.g., a frame period having a duration of 1024 frames). Logical slots in the slot set may be sequentially numbered as 0, 1, ... in chronological order.
- A "logical slot" may refer to a slot that may be configured to belong to a slot set of a certain SL resource pool.
- An "SL slot" may refer to a slot that belongs to a slot set of a certain SL resource pool.
- An "SL slot" may refer to a slot that may be configured to belong to a slot set of a certain SL resource pool.
- An SL symbol set in an SL slot may be denoted as $L_{SL} = \{l_0^{SL}, l_1^{SL}, ..., l_{N_{length}^{SL}-1}^{SL}\}$, where $l_0^{SL}, l_1^{SL}, ......, l_{N_{length}^{SL}-1}^{SL}$ represent indexes of corresponding symbols in the slot, respectively, where $l_0^{SL} = l_{start}^{SL}, l_1^{SL} = l_{start}^{SL} + 1, ......, l_{N_{length}^{SL}-1}^{SL} = l_{start}^{SL} + N_{length}^{SL} - 1$, where $l_{start}^{SL}$ is the index of the first SL symbol in the slot (for example, configured via the parameter *sl-StartSymbol),* and $N_{length}^{SL}$ is the number of SL symbols in the slot (for example, configured via the parameter *sl-LengthSymbols).*
- An SL transmission which multiplexes a Physical Sidelink Shared Channel (PSSCH) and a Physical Sidelink Control Channel (PSCCH) associated therewith in the same resource (e.g., several sub-channels in an SL slot) may be referred to as a "PSCCH/PSSCH transmission".
- In the time-domain, a "frame" (or referred to as a "radio frame") may be a system frame or a direct frame. A frame number period (e.g., denoted as $T_{FNP}$) may be a predefined or configured or pre-configured value, e.g., $T_{FNP}$ = 1024 frames. The duration of each frame may be $T_f$ = 10 milliseconds, which may include 10 subframes, where the duration of each subframe is $T_{sf}$ = 1 millisecond. Each subframe may include $N_{slot}^{subframe,\mu}$ slots, e.g., $N_{slot}^{subframe,\mu} = 2^{\mu}$. The index of a slot in a subframe may be denoted as $n_s^{\mu}$ ( $n_s^{\mu} \in \{0, 1, ..., N_{slot}^{subframe,\mu} - 1\}$). The index of a slot in a frame may be denoted as $n_{s,f}^{\mu}$ ( $n_{s,f}^{\mu} \in \{0, 1, ..., N_{slot}^{frame,\mu} - 1\}$), where $N_{slot}^{frame,\mu}$ may be equal to 10 · $2^{\mu}$. A slot index in a frame number period may be denoted as $n_{s,f,p}^{\mu}$ ( $n_{s,f,p}^{\mu} \in \{0, 1, ..., N_{slot}^{FNP,\mu} - 1\}$), where $N_{slot}^{FNP,\mu}$ may be equal to $T_{FNP} \cdot N_{slot}^{frame,\mu}$ (e.g., 1024 · (10 · $2^{\mu}$)).

5G is capable of operating in both a licensed spectrum (e.g., 2010 MHz to 2025 MHz) and an unlicensed spectrum (e.g., part or all of 5150 MHz to 5925 MHz, part or all of 5925 MHz to 7125 MHz, and part or all of 5925 MHz to 6425 MHz).

When 5G operates in an unlicensed spectrum, a 5G-capable communication node may perform a "channel access procedure" on a "channel" (or "shared-spectrum channel"). A channel may correspond to a set consisting of several consecutive RBs. An operation performed on one or more shared spectrum channels may be referred to as an "operation with shared spectrum channel access". In contrast, an operation on a licensed spectrum may be referred to as an "operation without shared spectrum channel access".

One channel may correspond to one carrier, or a part of one carrier. For example, one channel may correspond to one carrier of a 20 MHz bandwidth. As another example, one channel may correspond to the lower 20 MHz part in a 40 MHz bandwidth carrier, and another channel may correspond to the other 20 MHz part (i.e., the higher 20 MHz part) in the same carrier.

A channel access procedure may be used to assess whether a channel can be used to perform one or more transmissions (or referred to as "assessing whether one or more transmissions can be performed on a channel"), and the assessment operation may be referred to as clear channel assessment (CCA). Such a mechanism of performing CCA before using a channel may be referred to as Listen Before Talk (LBT). Whether a communication node needs to perform CCA (or referred to as "needs to perform LBT") and a specific procedure of the CCA may be related to the regulations of the country and/or region in which the communication node is located.

In a channel access procedure, the state of a channel (e.g., as a result or an output of the channel access procedure) may be determined on the basis of a "sensing" operation performed on the channel. For example, the "clear" channel state may indicate a channel access success, or indicate that a corresponding channel is available, or indicate that one or more transmissions may be performed on the channel. As another example, the "busy" channel state may indicate a channel access failure, or indicate that a corresponding channel is unavailable, or indicate that no transmission can be performed on the channel). If a corresponding channel cannot be accessed before a start time of an intended transmission (e.g., before the first symbol corresponding to the transmission) (e.g., the channel cannot be accessed because the state of the channel is "busy"), it can be considered that a "channel access failure" occurs, which may be alternatively referred to as an "LBT failure" where applicable.

A transmission performed on a corresponding channel(s) after a channel access procedure is performed may be referred to as "channel occupancy" (CO), and a corresponding duration may be referred to as a "channel occupancy time" (COT). A COT may be shared between one or more communication nodes, and accordingly, the time corresponding to the COT may include a time for which the one or more communication nodes perform transmissions on respective channel(s), and optionally, a time corresponding to a transmission gap between the transmissions (e.g., when the duration of the transmission gap is less than or equal to 25 *us*).

The channel access procedures may be classified into a plurality of types according to usage, applicable scenarios, etc. For example, if a time span of a sensing slot in which the sensing result is clear before transmission is performed is denoted as $T^{sns}_{last,intvl}$, $T^{sns}_{last,intvl}$ is random in "channel access procedure type 1". In "channel access procedure type 2", $T^{sns}_{last,intvl}$ is deterministic. Channel access procedure type 1 may be used for a non-shared COT or a shared COT. Channel access procedure type 2 may be used to perform channel access in a COT shared by one other communication node.

After initiating a COT (for example, a result of performing channel access procedure type 1 is "channel access success"), a UE may share the COT (or a remaining time of the COT) with (one or more) other UE(s). The UE that initiates the COT may indicate, via signaling transmitted on an SL, information about the COT to be shared. A UE that receives a COT sharing indication may determine, according to one or more conditions, whether the corresponding COT may be used. The "COT sharing" mechanism, in one aspect, enables UE(s) using the shared COT to better use the COT, but, in another aspect, may disable one or more resources previously reserved by UE(s) that cannot use the COT. This presents a challenge for resource reservation and/or selection and/or reselection for the latter UE(s).

For an unlicensed spectrum, a set of available resource blocks in a channel may be referred to as an "RB set". In a carrier (e.g., denoted as c), there may be $N^{RBset}_C \ (N^{RBset}_C \geq 1)$ RB sets denoted as, for example, $rs_0$, $rs_1$, ......, $rs_{N^{RBset}_C-1}$, respectively. For $i \in \{0,1,...,N^{RBset}_C - 1\}$, the lowest indexed CRB and the highest indexed CRB of $rs_i$ may be denoted as $N^{RS,start}_i$ and $N^{RS,end}_i$, respectively. The number of RBs of $rs_i$ may be denoted as $N^{RS,size}_i$, where $N^{RS,size}_i$ may be equal to $N^{RS,end}_i - N^{RS,start}_i + 1$. In addition, optionally, $N^{GB}_C = N^{RBset}_C - 1$ guard bands (or referred to as "intra-cell guard bands") for separating the $N^{RBset}_C$ RB sets may be present in the carrier, and are denoted as, for example, $gb_0$, $gb_1$, ..., $gb_{N^{GB}_C-1}$, respectively. For $j \in \{0,1,...,N^{GB}_C - 1\}$, the lowest indexed CRB and the highest indexed CRB of $gb_j$ may be denoted as $N^{GB,start}_j$ and $N^{GB,end}_j$, respectively. The number of RBs of $gb_j$ may be denoted as $N^{GB,size}_j$, where $N^{GB,size}_j$ may be equal to $N^{GB,end}_j - N^{GB,start}_j + 1$, and $gb_j$ may be used to separate the RB set $rs_j$ and the RB set $rs_j$ + 1. For example, in a 40 MHz bandwidth carrier, for a 15 kHz SCS, there may be 216 consecutive RBs (e.g., CRB indexes thereof are denoted as 0, 1, ..., 215, respectively), and the 216 RBs may be divided into three subsets, corresponding to one RB set $rs_0 (N^{RS,start}_0 = 0, N^{RS,end}_0 = 104, N^{RS,size}_0 = 105)$, one guard band $gb_0 (N^{GB,start}_0 = 105, N^{GB,end}_0 = 110, N^{GB,size}_0 = 6)$, and one RB set $rs_1 (N^{RS,start}_1 = 111, N^{RS,end}_1 = 215, N^{RS,size}_1 = 105)$, respectively.

A set consisting of the $N_C^{RBset}$ RB sets may be denoted as $RS_C = \{rs_0, rs_1, \ldots, rs_{N_C^{RBset}-1}\}$. For $i \in \{0, 1, \ldots, N_C^{RBset} - 2\}$, there may be zero or one guard band between two adjacent RB sets ($rs_i$ and $rs_i + 1$). A set consisting of the $N_C^{GB}$ guard bands may be denoted as $GB_C = \{gb_0, gb_1, \ldots, gb_{N_C^{GB}-1}\}$. For $j \in \{0, 1, \ldots, N_C^{GB} - 1\}$, if $gb_j$ is an empty set, it may be considered that no corresponding guard band is present. For $j = 0, 1, \ldots, N_C^{GB} - 1$, if each $gb_j$ is an empty set, it may be considered that there is no guard band between the RB sets of the carrier c. $N_C^{BWP}$ ($N_C^{BWP} \geq 1$) bandwidth parts (BWPs) may be configured in the carrier c, and are denoted as, for example, $bwp_0$, $bwp_1$, ......, $bwp_{N_C^{BWP}-1}$, respectively. For $k \in \{0, 1, \ldots, N_C^{BWP} - 1\}$, $bwp_k$ may correspond to $N_{BWP,k}^{RBset}$ ($N_{BWP,k}^{RBset} \leq N_C^{RBset}$) RB sets, denoted as, for example, $rs_{a_{k,0}}$, $rs_{a_{k,1}}$, ......, $rs_{a_{k,N_{BWP,k}^{RBset}-1}}$, respectively. For $l \in \{0, 1, \ldots, N_{BWP,k}^{RBset} - 1\}$, $rs_{a_{k,l}}$ is an element in the set $RS_C$, and $a_{k,0}, a_{k,1}, \ldots, a_{k,N_{BWP,k}^{RBset}-1}$ may satisfy $a_{k,0} < a_{k,1} < \cdots < a_{k,N_{BWP,k}^{RBset}-1}$. The lowest indexed CRB (e.g., denoted as $N_{BWP,k}^{start}$) of $bwp_k$ may be equal to $N_{a_{k,0}}^{RS,start}$, and the number of RBs of $bwp_k$ (e.g., denoted as $N_{BWP,k}^{size}$) may be equal to $N_{a_{k,N_{BWP,k}^{RBset}-1}}^{RS,end} - N_{a_{k,0}}^{RS,start} + 1$. The $N_{BWP,k}^{RBset}$ RB sets may be $N_{BWP,k}^{RBset}$ consecutive RB sets. For example, for $l \in \{1, \ldots, N_{BWP,k}^{RBset} - 1\}$, $a_{k,l} = a_{k,0} + l$. For convenience, when no ambiguity is caused (e.g., in an operation involving only one BWP), $N_{BWP,k}^{RBset}$ may be denoted as $N_{BWP}^{RBset}$, and $rs_{a_{k,0}}$, $rs_{a_{k,1}}$, ......, $rs_{a_{k,N_{BWP,k}^{RBset}-1}}$ may be denoted as $rs_{a_0}$, $rs_{a_1}$, ......, $rs_{a_{N_{BWP}^{RBset}-1}}$ respectively. A set consisting of the $N_{BWP}^{RBset}$ RB sets may be denoted as $RS_{BWP} = \{rs_{a_0}, rs_{a_1}, \ldots, rs_{a_{N_{BWP}^{RBset}-1}}\}$. The set $RS_{BWP}$ may be equal to the set $RSc$ or equal to a subset of the set $RSc$.

For the unlicensed spectrum, in order to ensure fair channel sharing between different communication nodes, a certain restriction may be imposed on the power spectral density (PSD) and/or occupied channel bandwidth (OCB) of signal transmission. For example, the maximum PSD cannot exceed 10 dBm/MHz. As another example, when a channel is used, the bandwidth containing 99% of the transmission power must be greater than or equal to a certain percentage (e.g., 80%) of the nominal channel bandwidth. The restriction (if any) may be made and enforced by regulatory authorities. The restrictions (if any) on the PSD and/or the OCB may be different in different countries and/or regions.

To meet the restriction on the OCB, one radio transmission may correspond to one or more "interlaces". For example, $M_{INT}$ ($M_{INT} \geq 1$) interlaces may be defined, and the corresponding interlace set is $I_{ALL} = \{int_0, int_1, \ldots, int_{M_{INT}-1}\}$. For $\in \{0, 1, \ldots, M_{INT} - 1\}$, the interlace $int_m$ may correspond to the CRB set $\{m, M_{INT} + m, 2M_{INT} + m, 3M_{INT} + m, \ldots\}$. $M_{INT}$ may be a predefined or configured or pre-configured value.

The value of $M_{INT}$ may be related to a subcarrier spacing configuration $\mu$. For example, for $\mu = 0$, $M_{INT} = 10$, and for $\mu = 1$, $M_{INT} = 5$.

For the same subcarrier spacing configuration $\mu$, different interlaces may be defined for different purposes (e.g., different types of SL transmissions). For example, for the same subcarrier spacing configuration $\mu$, one value of $M_{INT}$ is defined for S-SS/PSBCH transmission, and another value of $M_{INT}$ is defined for PSCCH/PSSCH transmission and/or Physical Sidelink Feedback Channel (PSFCH) transmission. As another example, for the same subcarrier spacing configuration $\mu$, one value of $M_{INT}$ is defined for S-SS/PSBCH transmission, and no interlace is defined for PSCCH/PSSCH transmission and/or PSFCH transmission.

The definition of the interlace may apply only to some subcarrier spacing configurations but not to other subcarrier spacing configurations.

An RB in an interlace may be referred to as an IRB. For example, in $bwp_k$, the indexes of IRBs in the interlace $int_m$ may be denoted as $N_{m,0}^{IRB} = 0$, $N_{m,1}^{IRB} = 1$, ..., respectively in ascending order of frequencies. The corresponding CRB indexes may be denoted as $N_{m,0}^{CRB}$, $N_{m,1}^{CRB}$, ...., respectively. The corresponding PRB indexes may be denoted as $N_{m,0}^{PRB}$, $N_{m,1}^{PRB}$, ...., respectively.

The relationship between the IRB index $N_{m,z}^{IRB}$ $(z = 0, 1, ...)$ and the corresponding CRB index $N_{m,z}^{CRB}$ may be denoted as $N_{m,z}^{CRB} = f_{IRB}^{CRB}(m, N_{m,z}^{IRB})$, where $f_{IRB}^{CRB}(m, N_{m,z}^{IRB})$ may be defined as:

$$f_{IRB}^{CRB}(m, N_{m,z}^{IRB}) = M_{INT} \cdot N_{m,z}^{IRB} + N_{BWP,k}^{start} + \left( (m - N_{BWP,k}^{start}) \bmod M_{INT} \right)$$

The relationship between the IRB index $N_{m,z}^{IRB}$ ($z = 0, 1, ...$) and the corresponding PRB index $N_{m,z}^{PRB}$ may be denoted as $N_{m,z}^{PRB} = f_{IRB}^{PRB}(m, N_{m,z}^{IRB})$, where $f_{IRB}^{PRB}(m, N_{m,z}^{IRB})$ may be defined as:

$$f_{IRB}^{PRB}(m, N_{m,z}^{IRB}) = M_{INT} \cdot N_{m,z}^{IRB} + \left( (m - N_{BWP,k}^{start}) \bmod M_{INT} \right)$$

For an SL transmission on an unlicensed spectrum, a consecutive PRB-based frequency resource allocation scheme may be supported. For example, an SL transmission may occupy several consecutive subchannels in an SL resource pool in an SL bandwidth part in an SL carrier, and each subchannel is mapped to several consecutive PRBs. In this case, whether the size of each subchannel (i.e., the number of PRBs corresponding to the subchannel) in a resource pool is equal may be related to a method of processing the guard band. For example, if a subchannel cannot include any PRB in any guard band, the sizes of two different subchannels in the resource pool may not be equal. As another example, if no guard band is configured in the resource pool, the sizes of all subchannels in the resource pool may be equal.

For an SL transmission on an unlicensed spectrum, an interlace-based resource allocation scheme may be supported. For example, an SL transmission may occupy several consecutive subchannels in an SL resource pool in an SL bandwidth part in an SL carrier, and each subchannel may be mapped to all PRBs belonging to a certain interlace in a certain RB set. In this case, if two different subchannels are mapped to two different interlaces in a certain RB set, respectively, and the numbers of PRBs corresponding to the two interlaces are not equal, the sizes of the two subchannels are not equal.

In an SL transmission, in order to ensure correct reception and/or good reception performance of a TB, an initial transmission and one or more retransmissions of the TB need to correspond to the same size (for example, referred to as a transport block size (TBS)). In subchannel-based frequency resource allocation, the non-uniformity of the subchannel sizes presents a challenge to the determination of the TBS.

**Embodiment 1**

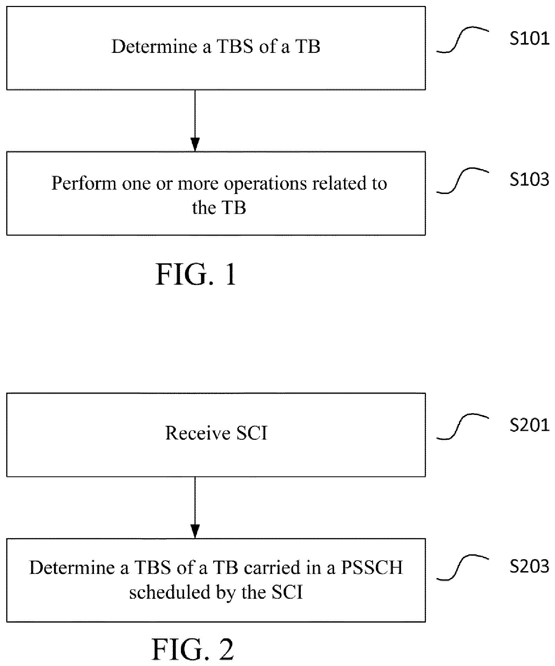

A method performed by a UE according to Embodiment 1 of the present invention will be described below with reference to FIG. 1.

FIG. 1 illustrates a flowchart corresponding to a method performed by a UE according to Embodiment 1 of the present invention.

As illustrated in FIG. 1, in Embodiment 1 of the present invention, the steps performed by the UE include: step S101 and step S103.

Specifically, in step S101, a TBS (e.g., denoted as $N_{TBS}$, e.g., representing $N_{TBS}$ bits) of a TB (e.g., denoted as $TB_1$) is determined.

$TB_1$ may be used to carry data to be transmitted by the UE (e.g., data from an application layer).

$TB_1$ may be carried in a PSSCH (e.g., denoted as $PSSCH_1$). A PSCCH associated with the $PSSCH_1$ may be denoted as $PSCCH_1$. The $PSSCH_1$ and the $PSCCH_1$ may be multiplexed in a time-frequency resource, wherein some or all information of the time-frequency resource may be indicated in corresponding SCI (e.g., denoted as $SCI_1$). 1st-stage SCI (e.g., denoted as $SCI_{1, 1st}$) corresponding to the $SCI_1$ may be carried in the $PSCCH_1$, and 2nd-stage SCI (e.g., denoted as $SCI_{l, 2nd}$) and the $TB_1$ may be multiplexed in the $PSSCH_1$.

A slot in which the $PSSCH_1$ is located may be denoted as a slot $t'^{SL,u}_{i_0}$ in an SL resource pool (e.g., denoted as $u$) in an SL bandwidth part (e.g., denoted as $b$) in an SL carrier (e.g., denoted as $c$). The number of subchannels in the resource pool $u$ may be denoted as $N_{subChan}^{SL,u}$, where $N_{subChan}^{SL,u}$ may be configured by a higher-layer parameter (e.g., sl-NumSubchannel). The number of subchannels allocated for the $PSSCH_1$ may be denoted as $N_{SC}^{alloc}$, where $N_{SC}^{alloc}$ may satisfy $1 \leq N_{SC}^{alloc} \leq N_{subChan}^{SL,u}$.

For $i \in \{0, 1, ..., N_{subChan}^{SL,u} - 1\}$, the size of the subchannel $i$ in the resource pool $u$ may be denoted as

$N_i^{SL,u,RBSC}$ (e.g., representing $N_i^{SL,u,RBSC}$ RBs). The $N_i^{SL,u,RBSC}$ RBs may be consecutive RBs (e.g., when the consecutive PRB-based frequency resource allocation scheme is used) or non-consecutive RBs (e.g., when the interlace-based resource allocation scheme is used).

For $i \in \{0, 1, \dots, N_{subChan}^{SL,u} - 1\}$, $j \in \{0, 1, \dots, N_{subChan}^{SL,u} - 1\}$, and $i \neq j$, $N_i^{SL,u,RBSC}$ and $N_j^{SL,u,RBSC}$ may satisfy $N_i^{SL,u,RBSC} = N_j^{SL,u,RBSC}$ or $N_i^{SL,u,RBSC} \neq N_j^{SL,u,RBSC}$.

If the sizes of all subchannels in the resource pool $u$ are equal (i.e., $N_0^{SL,u,RBSC} = N_1^{SL,u,RBSC} = \cdots = N_{N_{subChan}^{SL,u}-1}^{SL,u,RBSC}$), for $i \in \{0, 1, \dots, N_{subChan}^{SL,u} - 1\}$, $N_i^{SL,u,RBSC}$ for $i \in \{0, 1, \dots, N_{subChan}^{SL,u} - 1\}$, $N_i^{SL,u,RBSC}$ may be denoted as $N_{RBSC}^{SL,u}$ (i.e., $N_0^{SL,u,RBSC} = N_1^{SL,u,RBSC} = \cdots = N_{N_{subChan}^{SL,u}-1}^{SL,u,RBSC} = N_{RBSC}^{SL,u}$).

The $TB_1$ may be mapped to a transport channel, and the transport channel may be mapped to the $PSSCH_1$. For example, the transport channel may be a sidelink shared channel (SL-SCH), and accordingly, the $TB_1$ may be referred to as an "SL-SCH TB".

After the $TB_1$ is subjected to steps such as channel coding (e.g., low density parity check (LDPC) coding) and/or rate matching, a codeword may be formed. A block of complex-valued symbols that is generated after the codeword is subjected to steps such as scrambling and/or modulation and/or layer mapping and/or precoding may be mapped to (a plurality of) resource elements (REs) corresponding to (one or more) RB(s) allocated for the $PSSCH_1$, where each complex-valued symbol may correspond to one RE. In addition, the "RB allocated for the $PSSCH_1$" may be the RB corresponding to the $N_{SC}^{alloc}$ subchannels allocated for the $PSSCH_1$ (for example, if $N_{SC}^{alloc} = 2$, and the corresponding subchannels are subchannel 0 and subchannel 1, and $N_{RBSC}^{SL,u} = 10$, the "RB allocated for the $PSSCH_1$" refers to 10 · 2 = 20 RBs corresponding to subchannel 0 and subchannel 1).

The step S101 may consist of one or more substeps. For example, in a first substep of step S101, a first number of REs (e.g., denoted as $N'_{RE}$) is determined, where the first number of REs $N'_{RE}$ may represent the number of REs allocated for the $PSSCH_1$ in one RB. Specifically, for example, $N'_{RE} = N_{sc}^{RB} \cdot N_{symb}^{PSSCH} - N_{oh}^{PRB} - N_{RE}^{DMRS}$.

· $N_{sc}^{RB}$ may represent the number of subcarriers in one RB. $N_{sc}^{RB}$ may be a predefined constant, e.g., $N_{sc}^{RB} = 12$.

· $N_{symb}^{PSSCH}$ may represent the number of symbols for the $PSSCH_1$. For example, $N_{symb}^{PSSCH} = N_{symb}^{sh} - N_{symb}^{PSFCH}$.

  ▪ $N_{symb}^{sh}$ may be equal to $N_{symb}^{SL,tot} - N_{symb}^{CTRL}$, where $N_{symb}^{SL,tot}$ may be the number of SL symbols in the slot $t_{i_0}^{'SL,u}$ (for example, $N_{symb}^{SL,tot}$ may be equal to a value configured by a higher-layer parameter sl-LengthSymbols in the SL resource pool $u$ and/or the SL bandwidth part $b$ and/or the SL carrier $c$). $N_{symb}^{CTRL}$ may be the number of symbols related to the $PSSCH_1$ and used for automatic gain control (AGC) and/or transmission-reception switching and/or other purposes (for example, $N_{symb}^{CTRL} = 2$, one of the symbols may be used for AGC, and the other symbol may be used as a gap symbol corresponding to transmission-reception switching).

  ▪ $N_{symb}^{PSFCH}$ may represent "PSFCH overhead". $N_{symb}^{PSFCH}$ may be related to a PSFCH-related configuration (e.g., a PSFCH period configured by a higher-layer parameter sl-PSFCH-Period in the SL resource pool $u$ and/or the SL bandwidth part $b$ and/or the SL carrier $c$, e.g. denoted as $N_{period}^{PSFCH}$, and e.g., representing $N_{period}^{PSFCH}$ slots in the SL resource pool $u$) and/or a PSFCH-related indication (e.g., a value indicated by a "PSFCH overhead indication" field, e.g., denoted as $O_{PSFCH}$) in the $SCI_1$. Specifically, for example, if $N_{period}^{PSFCH} = 1$, then $N_{symb}^{PSFCH} = 3$. As another

example, if $N^{PSFCH}_{period} = 0$ (for example, this may correspond to the case that no PSFCH resource is configured in the SL resource pool $u$), $N^{PSFCH}_{symb} = 0$. As another example, if $N^{PSFCH}_{period} = 2$ or $N^{PSFCH}_{period} = 4$, and $O_{PSFCH} = 1$, then $N^{PSFCH}_{symb} = 3$. As another example, if $N^{PSFCH}_{period} = 2$ or $N^{PSFCH}_{period} = 4$, and $O_{PSFCH} = 0$, then $N^{PSFCH}_{symb} = 0$.

- $N^{DMRS}_{RE}$ may represent the number of REs occupied by a PSSCH demodulation reference signal (DMRS or DM-RS) in the $PSSCH_1$. $N^{DMRS}_{RE}$ may be related to a PSSCH DMRS time pattern list configured (e.g., configured via a higher-layer parameter *sl-PSSCH-DMRS-TimePatternList*) in the SL resource pool $u$ and/or the SL bandwidth part $b$ and/or the SL carrier $c$, where the PSSCH DMRS time pattern list may be represented by a set of corresponding numbers of PSSCH DMRS symbols. Specifically, for example, the $N^{DMRS}_{RE}$ may be determined by looking up the following predefined table according to the configured PSSCH DMRS time pattern list.

| PSSCH DMRS time pattern list | $N^{DMRS}_{RE}$ |
|---|---|
| {2} | 12 |
| {3} | 18 |
| {4} | 24 |
| {2,3} | 15 |
| {2,4} | 18 |
| {3,4} | 21 |
| {2,3,4} | 18 |

- $N^{PRB}_{oh}$ may represent an overhead configured by a higher-layer protocol (e.g., representing an overhead corresponding to another reference signal multiplexed in the $PSSCH_1$ except for the PSSCH DMRS). Specifically, for example, $N^{PRB}_{oh}$ may be equal to a value configured by a higher-layer parameter *sl-X-Overhead* in the SL resource pool $u$ and/or the SL bandwidth part $b$ and/or the SL carrier $c$.

As another example, in a second substep of the step S101, a second number (e.g., denoted as $N_{RE}$) of REs is determined, where the second number $N_{RE}$ of REs may represent the number of REs allocated for the $PSSCH_1$. Specifically, for example,

$$N_{RE} = N'_{RE} \cdot n_{PRB} - N^{SCI,1}_{RE} - N^{SCI,2}_{RE}.$$

- $N^{SCI,1}_{RE}$ may represent the number of REs occupied by the $PSCCH_1$ and the corresponding PSCCH DMRS.
- $N^{SCI,2}_{RE}$ may represent the number of coded modulation symbols (or referred to as coded symbols) generated for transmission of $SCI_{1,\ 2nd}$. $N^{SCI,2}_{RE}$ may be the number of coded modulation symbols before performing the corresponding operation of copying to a second layer (if any). Further, when determining $N^{SCI,2}_{RE}$, it may be assumed that $\gamma = 0$, where $\gamma$ represents the number of vacant REs in a resource block to which the last coded modulation symbol of the $SCI_{1,\ 2nd}$ belongs.
- $n_{PRB}$ may represent the number of RBs allocated for the $PSSCH_1$. For example, the $n_{PRB}$ may be determined according to one or more of

$$N^{SL,u}_{subChan}, \quad N^{alloc}_{SC}, \quad N^{SL,u}_{RBSC}, \quad N^{SL,u,RBSC}_{0}, \quad N^{SL,u,RBSC}_{1}, \quad \ldots\ldots, \quad N^{SL,u,RBSC}_{N^{SL,u}_{subChan}-1}.$$

Specifically, for example, the $n_{PRB}$ may be determined according to one of the following methods:

- $$n_{PRB} = N_{SC}^{alloc} \cdot N_{RBSC}^{SL,u}.$$

- $$n_{PRB} = N_{SC}^{alloc} \cdot N_{K_0}^{SL,u,RBSC}.$$

$K_0$ may be a predefined or configured or pre-configured value, for example, $K_0 = 0$, or $K_0 = N_{subChan}^{SL,u} - 1$, or $K_0 = \lfloor N_{subChan}^{SL,u}/2 \rfloor$, or $K_0 = \lceil N_{subChan}^{SL,u}/2 \rceil$, or $K_0 = \text{round}(N_{subChan}^{SL,u}/2)$,

- $n_{PRB} = N_{SC}^{alloc} \cdot N_{min}^{SL,u,RBSC}$. $N_{min}^{SL,u,RBSC}$ is the minimum value of $N_0^{SL,u,RBSC}$, $N_1^{SL,u,RBSC}$, ......, $N_{N_{subChan}^{SL,u}-1}^{SL,u,RBSC}$. For example, $N_{min}^{SL,u,RBSC}$ may be defined as $N_{min}^{SL,u,RBSC} = \min(N_0^{SL,u,RBSC}, N_1^{SL,u,RBSC}, ..., N_{N_{subChan}^{SL,u}-1}^{SL,u,RBSC})$.

- $n_{PRB} = N_{SC}^{alloc} \cdot N_{max}^{SL,u,RBSC}$. $N_{max}^{SL,u,RBSC}$ is the maximum value of $N_0^{SL,u,RBSC}$, $N_1^{SL,u,RBSC}$, ......, $N_{N_{subChan}^{SL,u}-1}^{SL,u,RBSC}$. For example, $N_{max}^{SL,u,RBSC}$ may be defined as $N_{max}^{SL,u,RBSC} = \max(N_0^{SL,u,RBSC}, N_1^{SL,u,RBSC}, ..., N_{N_{subChan}^{SL,u}-1}^{SL,u,RBSC})$.

- $n_{PRB} = N_{SC}^{alloc} \cdot N_{avg}^{SL,u,RBSC}$. $N_{avg}^{SL,u,RBSC}$ is an average value of $N_0^{SL,u,RBSC}$, $N_1^{SL,u,RBSC}$, ......, $N_{N_{subChan}^{SL,u}-1}^{SL,u,RBSC}$. For example, $N_{avg}^{SL,u,RBSC}$ may be defined as $N_{min}^{SL,u,RBSC} = \left( \sum_{i=0}^{N_{subChan}^{SL,u}-1} N_i^{SL,u,RBSC} \right) / N_{subChan}^{SL,u}$, or defined as $N_{min}^{SL,u,RBSC} = \left\lfloor \left( \sum_{i=0}^{N_{subChan}^{SL,u}-1} N_i^{SL,u,RBSC} \right) / N_{subChan}^{SL,u} \right\rfloor$, or defined as $N_{min}^{SL,u,RBSC} = \left\lceil \left( \sum_{i=0}^{N_{subChan}^{SL,u}-1} N_i^{SL,u,RBSC} \right) / N_{subChan}^{SL,u} \right\rceil$, or defined as $N_{min}^{SL,u,RBSC} = \text{round}\left( \left( \sum_{i=0}^{N_{subChan}^{SL,u}-1} N_i^{SL,u,RBSC} \right) / N_{subChan}^{SL,u} \right)$.

As another example, in a third substep of the step S101, an unquantized intermediate variable (e.g., denoted as $N_{info}$) is determined. Specifically, for example, the $N_{info}$ may be defined as $N_{info} = N_{RE} \cdot R \cdot Q_m \cdot v$.

- R may represent a target code rate corresponding to the $PSSCH_1$ (or the $TB_1$). R may be a code rate corresponding to an MCS index (e.g., denoted as $I_{MCS}$) in an MCS table (or referred to as an MCS index table). The MCS table may be configured by a higher-layer protocol or indicated in the $SCI_1$ (e.g., in the $SCI_{1, 1st}$). The MCS index $I_{MCS}$ may be indicated in the $SCI_1$ (e.g., in the $SCI_{1, 1st}$).
- $Q_m$ may represent a modulation order corresponding to the $PSSCH_1$ (or the $TB_1$). The $Q_m$ may be a modulation order corresponding to the MCS index $I_{MCS}$ in the MCS table.
- υ may represent the number of layers to which the $TB_1$ (or the codeword corresponding to the $TB_1$) is mapped in spatial multiplexing. For example, u = 1. As another example, υ = 2. Said υ may be determined according to predefined and/or configured or pre-configured information and/or indication information in the $SCI_1$ (e.g., in the $SCI_{1, 1st}$).

As another example, in a fourth substep of the step S101, the $N_{TBS}$ is determined. Specifically, for example, the $N_{TBS}$ is determined according to one or more of the following.

- If $N_{info} \leq 3824$, a quantized intermediate variable for representing the number of information bits is determined first (e.g., denoted as $N'_{info}$, e.g., $N'_{info} = \max\left(24, 2^n \cdot \left\lfloor \frac{N_{info}}{2^n} \right\rfloor\right)$, where $n = \max(3, \lfloor \log_2(N_{info}) \rfloor - 6)$, and the $N_{TBS}$ is determined by looking up a predefined TBS table according to the $N'_{info}$. For example, the $N_{TBS}$ is equal to a TBS closest to and not less than the $N'_{info}$ in the TBS table.

- If $N_{info} > 3824$, a quantized intermediate variable for representing the number of information bits is determined (e.g., denoted as $N'_{info}$, e.g., $N'_{info} = \max\left(3840, 2^n \cdot \text{round}\left(\frac{N_{info}-24}{2^n}\right)\right)$, where $n = \lfloor \log_2(N_{info} - 24) \rfloor - 5$, and the $N_{TBS}$ is determined according to the $N'_{info}$. Specifically, for example, the $N_{TBS}$ is determined according to a method corresponding to the following pseudo code:

$$\text{if } R \leq 1/4, \text{ then}$$
$$N_{TBS} = 8 \cdot C \cdot \left\lceil \frac{N'_{info}+24}{8 \cdot C} \right\rceil - 24, \quad \text{where } C = \left\lceil \frac{N'_{info}+24}{3816} \right\rceil$$

$$\text{otherwise}$$

$$\text{if } N'_{info} > 8424, \text{ then}$$
$$N_{TBS} = 8 \cdot C \cdot \left\lceil \frac{N'_{info}+24}{8 \cdot C} \right\rceil - 24, \quad \text{where } C = \left\lceil \frac{N'_{info}+24}{8424} \right\rceil$$

$$\text{otherwise}$$

$$N_{TBS} = 8 \cdot \left\lceil \frac{N'_{info}+24}{8} \right\rceil - 24$$

Furthermore, in step S103, one or more operations related to the TB are performed. For example, the $PSSCH_1$ and/or the $PSCCH_1$ are transmitted.

In Embodiment 1 of the present invention, an execution order of the substeps of the step S101 may be the first substep, the second substep, the third substep, and the fourth substep sequentially.

In Embodiment 1 of the present invention, the first number of REs, $N'_{RE}$, may be used only for determining the $N_{TBS}$ and not for other purposes. For example, the first number of REs, $N'_{RE}$, may not be equal to the number of REs actually allocated for the $PSSCH_1$ in one PRB.

In Embodiment 1 of the present invention, the $N^{PSSCH}_{symb}$ may be used only for determining the $N_{TBS}$ and not for other purposes. For example, the $N^{PSSCH}_{symb}$ may not be equal to the number of symbols actually used for the $PSSCH_1$.

In Embodiment 1 of the present invention, the $N^{PSFCH}_{symb}$ may be used only for determining the $N_{TBS}$ and not for other purposes. For example, even no PSFCH resource is configured in the slot $t'^{SL,u}_{i_0}$, $N^{PSFCH}_{symb}$ may still be equal to 3.

In Embodiment 1 of the present invention, the $N^{DMRS}_{RE}$ may be used only for determining the $N_{TBS}$ and not for other purposes. For example, the $N^{DMRS}_{RE}$ may not be equal to the number of REs actually occupied by the PSSCH DMRS in the $PSSCH_1$.

In Embodiment 1 of the present invention, the second number of REs, $N_{RE}$, may be used only for determining the $N_{TBS}$ and not for other purposes. For example, the second number of REs, $N_{RE}$, may not be equal to the number of REs actually allocated for the $PSSCH_1$.

In Embodiment 1 of the present invention, the $n_{PRB}$ may be used only for determining the $N_{TBS}$ and not for other purposes. For example, the $n_{PRB}$ may not be equal to the number of RBs actually allocated for the $PSSCH_1$.

In Embodiment 1 of the present invention, optionally, the $n_{PRB}$ may be referred to as "the number of RBs allocated for the $PSSCH_1$ before rate matching".

Thus, according to the description of Embodiment 1, the present invention provides a method. When determining a size of a TB, a parameter "the number of RBs allocated for a PSSCH carrying the TB" is determined according to predefined and/or configured and/or pre-configured information related to the TB, so that the determined size of the TB may be independent of a size of each subchannel actually allocated for the TB, thereby ensuring that a TBS determined for an initial transmission of the TB is the same as that determined for (zero or one or more) retransmissions, and thereby ensuring performance when receiving the TB.

**Embodiment 2**

A method performed by a UE according to Embodiment 2 of the present invention will be described below with reference to FIG. 2.

FIG. 2 illustrates a flowchart corresponding to a method performed by a UE according to Embodiment 2 of the present invention.

As illustrated in FIG. 2, in Embodiment 2 of the present invention, the steps performed by the UE include: step S201 and step S203.

Specifically, in step S201, SCI is received.

For example, a PSCCH (e.g., denoted as $PSCCH_2$) in a slot (e.g., denoted as $t'^{SL,u_2}_{i_1}$ ) in an SL resource pool (e.g., denoted as $u_2$) in an SL bandwidth part (e.g., denoted as $b_2$) in an SL carrier (e.g., denoted as $c_2$) is detected and/or received, and 1st-stage SCI (e.g., denoted as $SCI_{2,\,1st}$) carried in the $PSCCH_2$ is decoded. 2nd-stage SCI corresponding to the $SCI_{2,\,1st}$ may be denoted as $SCI_{2,\,2nd}$, and SCI corresponding to the $SCI_{2,\,1st}$ and the $SCI_{2,\,2nd}$ may be denoted as $SCI_2$.

As another example, part or all of the $SCI_2$ is determined. Specifically, for example, the number of coded modulation symbols of the $SCI_{2,\,2nd}$ is determined.

As another example, information related to a PSSCH (e.g., denoted as $PSSCH_2$) scheduled (or "indicated", or "associated", or "allocated") by the $SCI_2$ is determined. Specifically, for example, the number of subchannels allocated for the $PSSCH_2$ is determined.

Further, in step S203, a TBS of a TB carried in the PSSCH scheduled by the SCI is determined. Specifically, for example, the TBS of the TB (e.g., denoted as $TB_2$) carried in the $PSSCH_2$ is determined according to the method in step S101 in Embodiment 1 of the present invention. The related parameters in Embodiment 1 of the present invention are replaced with corresponding parameters in Embodiment 2 of the present invention, respectively. For example, the following items are performed.

- c in Embodiment 1 of the present invention is replaced with the $c_2$.
- The predefined and/or configured and/or pre-configured information of c in Embodiment 1 of the present invention is replaced with corresponding predefined and/or configured and/or pre-configured information of the $c_2$.
- b in Embodiment 1 of the present invention is replaced with the $b_2$.
- The predefined and/or configured and/or pre-configured information of b in Embodiment 1 of the present invention is replaced with corresponding predefined and/or configured and/or pre-configured information of the $b_2$.
- u in Embodiment 1 of the present invention is replaced with the $u_2$.
- The predefined and/or configured and/or pre-configured information of u in Embodiment 1 of the present invention is replaced with corresponding predefined and/or configured and/or pre-configured information of the $u_2$.
- $t'^{SL,u}_{i_0}$ in Embodiment 1 of the present invention is replaced with the $t'^{SL,u_2}_{i_1}$ .
- $PSCCH_1$ in Embodiment 1 of the present invention is replaced with the $PSCCH_2$.
- $SCI_1$ in Embodiment 1 of the present invention is replaced with the $SCI_2$.
- $SCI_{1,\,1st}$ in Embodiment 1 of the present invention is replaced with the $SCI_{2,\,1st}$.
- $SCI_{1,\,2nd}$ in Embodiment 1 of the present invention is replaced with the $SCI_{2,\,2nd}$.
- $PSSCH_1$ in Embodiment 1 of the present invention is replaced with the $PSSCH_2$.
- $TB_1$ in Embodiment 1 of the present invention is replaced with the $TB_2$.

Thus, according to the description of Embodiment 2, the present invention provides a method. When determining a size of a TB, a parameter "the number of RBs allocated for a PSSCH carrying the TB" is determined according to predefined and/or configured and/or pre-configured information related to the TB, so that the determined size of the TB may be independent of a size of each subchannel actually allocated for the TB, thereby ensuring that a TBS determined for an initial transmission of the TB is the same as that determined for (zero or one or more) retransmissions, and thereby ensuring performance when receiving the TB.

**Embodiment 3**

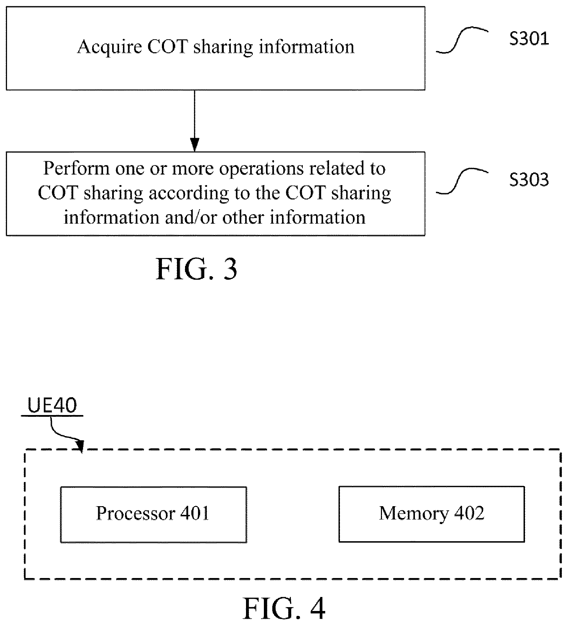

A method performed by a UE (e.g., denoted as UE-A) according to Embodiment 3 of the present invention will be described below with reference to FIG. 3.

FIG. 3 illustrates a flowchart corresponding to a method performed by the UE-A according to Embodiment 3 of the present invention.

As illustrated in FIG. 3, in Embodiment 3 of the present invention, the steps performed by the UE-A include: step S301 and step S303.

Specifically, in step S301, COT sharing information is acquired. For example, the COT sharing information is acquired by receiving a PSCCH (e.g., denoted as $PSCCH_1$) and/or a PSSCH (e.g., denoted as $PSSCH_1$) associated with the $PSCCH_1$ transmitted in a slot (e.g., denoted as $t'^{SL,u}_{i_0}$) in an SL resource pool (e.g., denoted as $u$) in an SL bandwidth part (e.g., denoted as $b$) in an SL carrier (e.g., denoted as $c$) by another UE (e.g., denoted as UE-B). SCI carried by the $PSCCH_1$ and/or the $PSSCH_1$ may be denoted as $SCT_1$.

The UE-B may be referred to as a "COT initiating UE".

The COT sharing information may be indicated by physical layer signaling (e.g., the $SCI_1$).

The COT sharing information may be indicated by higher-layer signaling (e.g., a MAC CE carried by the $PSCCH_1$ and/or the $PSSCH_1$, or an RRC message carried by the $PSCCH_1$ and/or the $PSSCH_1$).

The COT sharing information may include indication information related to a COT (e.g., denoted as $COT_0$).

In the time domain, the $COT_0$ may correspond to a period of time from $t^{COT,0}_{start}$ to $t^{COT,0}_{end}$. Wherein

- $t^{COT,0}_{start}$ may be a slot (e.g., a slot in the SL resource pool $u$).
- $t^{COT,0}_{end}$ may be a slot (e.g., a slot in the SL resource pool $u$).
- The $COT_0$ may include all slots from the $t^{COT,0}_{start}$ (including the $t^{COT,0}_{start}$, or not including the $t^{COT,0}_{start}$) to the $t^{COT,0}_{end}$ (including the $t^{COT,0}_{end}$, or not including the $t^{COT,0}_{end}$).
- The $COT_0$ may include all slots from the $t^{COT,0}_{start}$ (including the $t^{COT,0}_{start}$, or not including the $t^{COT,0}_{start}$) to the $t^{COT,0}_{end}$ (including the $t^{COT,0}_{end}$, or not including the $t^{COT,0}_{end}$) in the SL resource pool $u$.

The slot $t'^{SL,u}_{i_0}$ may be a slot in a time interval $[t^{COT,0}_{start}, t^{COT,0}_{end}]$. For example, $t'^{SL,u}_{i_0} = t^{COT,0}_{start}$. As another example, the slot $t'^{SL,u}_{i_0}$ is a slot preceding the slot $t^{COT,0}_{start}$ in the SL resource pool $u$.

The $COT_0$ may be a "remaining COT". That is, the $COT_0$ is a remaining part of a complete COT. For example, the complete COT may correspond to a period of time from $t^{COT,0}_{start,0}$ to $t^{COT,0}_{end}$, where $t^{COT,0}_{start,0}$ is a time earlier than the $t^{COT,0}_{start}$ (which may be represented as, e.g., $t^{COT,0}_{start,0} < t^{COT,0}_{start}$).

In the frequency domain, the $COT_0$ may correspond to a frequency resource set (e.g., detonated as

$$F_{RES}^{COT,0} = \{r_0^{COT,0}, r_1^{COT,0}, ..., r_{N_{RES}^{COT,0}-1}^{COT,0}\}$$ , where $N_{RES}^{COT,0}$ may be an integer greater than or equal to 1). For $i \in \{0, 1, ..., N_{RES}^{COT,0} - 1\}$, $r_i^{COT,0}$ may be an RB, or a subchannel, or an RB set.

The set $F_{RES}^{COT,0}$ may be a subset of a frequency resource set $F_{RES,max}^{COT,0}$. The number (e.g., denoted as $N_{RES,max}^{COT,0}$) of elements in the set $F_{RES,max}^{COT,0}$ may be an integer greater than or equal to 1. For $i \in \{0, 1, ..., N_{RES}^{COT,0} - 1\}$, $r_i^{COT,0}$ may represent an index of a corresponding frequency resource in the set $F_{RES,max}^{COT,0}$.

The set $F_{RES,max}^{COT,0}$ may be a set consisting of all RBs (or all subchannels, or all RB sets) in the SL resource pool u.

The set $F_{RES,max}^{COT,0}$ may be a set consisting of all RBs (or all RB sets) in the SL bandwidth part b.

The set $F_{RES,max}^{COT,0}$ may be a set consisting of all RBs (or all RB sets) in the SL carrier c.

The set $F_{RES,max}^{COT,0}$ may not include any guard band.

If the set $F_{RES,max}^{COT,0}$ includes two consecutive RB sets, a guard band (if any) between the two RB sets may belong to the set $F_{RES,max}^{COT,0}$.

The set $F_{RES}^{COT,0}$ may be a predefined or configured or pre-configured set. For example, $F_{RES}^{COT,0} = F_{RES,max}^{COT,0}$.

The set $F_{RES}^{COT,0}$ may be indicated in the COT sharing information. Specifically, for example, frequency resources in the set $F_{RES}^{COT,0}$ may be consecutive resources, and accordingly, the set $F_{RES}^{COT,0}$ may be indicated by a resource indicator value (RIV) in the COT sharing information. The RIV corresponds to a "starting frequency resource" (i.e., $r_0^{COT,0}$) and a "length" (i.e., $N_{RES}^{COT,0}$) indicating the number of consecutive frequency resources. The RIV may be defined as follows:

$$\text{if } \left(N_{RES}^{COT,0} - 1\right) \leq \left\lfloor N_{RES,max}^{COT,0}/2 \right\rfloor, \text{ then}$$
$$RIV = N_{RES,max}^{COT,0}\left(N_{RES}^{COT,0} - 1\right) + r_0^{COT,0}$$
$$\text{otherwise}$$
$$RIV = N_{RES,max}^{COT,0}\left(N_{RES,max}^{COT,0} - N_{RES}^{COT,0} + 1\right) + \left(N_{RES,max}^{COT,0} - 1 - r_0^{COT,0}\right)$$

The set $F_{RES}^{COT,0}$ may correspond to frequency resources occupied by the $PSCCH_1$ and/or the $PSSCH_1$. For example, the set $F_{RES}^{COT,0}$ may be a set consisting of subchannel(s) allocated for the $PSCCH_1$ and/or the $PSSCH_1$. As another example, the set $F_{RES}^{COT,0}$ may be a set consisting of RBs corresponding to (one or more) subchannel(s) allocated for the $PSCCH_1$ and/or the $PSSCH_1$. As another example, the set $F_{RES}^{COT,0}$ may be a set consisting of (one or more) RB(s) allocated for the $PSCCH_1$ and/or the $PSSCH_1$.

The set $F_{RES}^{COT,0}$ may be a set consisting of (one or more) RB set(s) within which the frequency resource(s) occupied by the $PSCCH_1$ and/or the $PSSCH_1$ is located.

The set $F_{RES}^{COT,0}$ may be a set consisting of all RBs (or all subchannels, or all RB sets) in the SL resource pool $u$.

The set $F_{RES}^{COT,0}$ may be a set consisting of all RBs (or all subchannels, or all RB sets) in the SL bandwidth part b.

The set $F_{RES}^{COT,0}$ may be a set consisting of all RBs (or all subchannels, or all RB sets) in the SL carrier c.

The set $F_{RES}^{COT,0}$ may not include any guard band.

For $i \in \{0, 1, ..., N_{RES}^{COT,0} - 2\}$, if $r_i^{COT,0}$ and $r_{i+1}^{COT,0}$ correspond to two consecutive RB sets in the SL carrier c or the SL bandwidth part $b$ or the SL resource pool $u$, a guard band (if any) between the two consecutive RB sets may belong to the $COT_0$.

The COT sharing information may include time-domain information, e.g., the $t_{start}^{COT,0}$, or the $t_{end}^{COT,0}$, or

$$t_{end}^{COT,0} - t_{start}^{COT,0}, \text{ or } t_{end}^{COT,0} - t_{start}^{COT,0} + 1, \text{ or } t_{end}^{COT,0} - t_{i_0}'^{SL,u}, \text{ or } t_{end}^{COT,0} - t_{i_0}'^{SL,u} + 1.$$

The COT sharing information may include frequency-domain information, e.g., the set $F_{RES}^{COT,0}$.

The COT sharing information may include a channel access priority class (CAPC), e.g., denoted as $p_{COT,0}$. The $p_{COT,0}$ may be equal to the value of an element in a pre-defined, configured, or pre-configured CAPC set (e.g., {1, 2, 3, 4}). Each CAPC may be used to determine values of a set of pre-defined or configured or pre-configured channel access parameters. Optionally, the larger the CAPC, the lower the corresponding priority. Alternatively, the larger the CAPC, the higher the corresponding priority.

Furthermore, in step S303, one or more operations related to COT sharing are performed according to the COT sharing information and/or other information.

For example, if an SL process (e.g., denoted as $SP_0$) of the UE-A and/or an SL grant (e.g., denoted as $SG_0$) associated with the $SP_0$ satisfies a first COT avoidance condition, one or more operations related to COT sharing are performed. A set of resource(s) corresponding to the $SG_0$ may be denoted as $R_0^{SG}$.

The first COT avoidance condition may include one or more of the following (in any combination of "and" or "or"):

- The $SG_0$ does not satisfy a first COT usage condition.

- A resource in the set $R_0^{SG}$ is in the $COT_0$.

- At least one resource in the set $R_0^{SG}$ is in the $COT_0$.

- All resources in the set $R_0^{SG}$ are in the $COT_0$.

The first COT usage condition may include one or more of the following (in any combination of "and" or "or"):

- The UE-A is a target receiver (or target UE) of one or more SL transmissions of the UE-B. For example, the UE-A is a target receiver of the $PSCCH_1$ and/or the $PSSCH_1$. As another example, the UE-A is a target receiver of a PSFCH and/or another PSCCH and/or another PSSCH transmitted by the UE-B in the $COT_0$.
- The CAPC corresponding to (or associated with) the $SG_0$ is smaller than the $p_{COT,0}$.
- The CAPC corresponding to (or associated with) the $SG_0$ is larger than the $p_{COT,0}$.
- The CAPC corresponding to (or associated with) the $SG_0$ is equal to the $p_{COT,0}$.

The one or more operations related to COT sharing may include one or more of the following:

- Removing the SL grant $SG_0$.
- Triggering transmission resource selection or reselection.

- Performing resource reselection for (one or more) resource(s) in the set $R_0^{SG}$ and in the $COT_0$. For example, for each resource in the set $R_0^{SG}$ and in the $COT_0$, the resource is removed from the SL grant $SG_0$, and a resource not in the $COT_0$ is randomly selected to replace the removed resource.

In Embodiment 3 of the present invention, a "resource" may correspond to a slot in the time domain (e.g., a slot in the SL resource pool *u*) and one or more subchannels (e.g., consecutively numbered subchannels, and specifically, e.g., subchannels 0, 1, and 2) in the frequency domain. The resource may occupy one or more OFDM symbols configured for an SL in the slot. The "resource" may be used for a PSCCH/PSSCH transmission.

Thus, according to the description of Embodiment 3, the present invention provides a method, so that when a UE learns, according to a received COT sharing indication, that one or more SL grants thereof cannot use a corresponding COT, the UE reselects a resource of the one or more SL grants, thereby avoiding a resource conflict with other UEs that may use the COT, and improving efficiency of channel access and resource sharing in the case of COT sharing.

**Variant Embodiment**

Below, FIG. 4 is used to illustrate a user equipment that may perform the method performed by a user equipment described in detail above in the present invention as a variant embodiment.

FIG. 4 is a block diagram illustrating a user equipment according to the present invention.

As illustrated in FIG. 4, the user equipment (UE) 40 includes a processor 401 and a memory 402. The processor 401 may include, for example, a microprocessor, a microcontroller, an embedded processor, and the like. The memory 402 may include, for example, a volatile memory (such as a random access memory (RAM)), a hard disk drive (HDD), a non-volatile memory (such as a flash memory), or other memories, etc. The memory 402 has program instructions stored thereon. The instructions, when run by the processor 401, may perform the above method performed by a user equipment described in detail in the present invention.

The method and related user equipment according to the present invention have been described above in combination with preferred embodiments. It should be understood by those skilled in the art that the method shown above is only exemplary, and the above-described embodiments can be combined with one another as long as no contradiction arises. The method of the present invention is not limited to the steps or sequences illustrated above. The user equipment illustrated above may include more modules. Various identifiers illustrated above are only exemplary, and are not meant to be limiting. The present invention is not limited to specific information elements serving as examples of these identifiers. Those skilled in the art could make various alterations and modifications according to the teachings of the illustrated embodiments.

It should be understood by those skilled in the art that any set is its own subset. An empty set is a subset of any set. Part or all of the mathematical expressions, mathematical equations, or mathematical inequalities may be simplified or transformed or rewritten to some extent (for example, merging constant terms, or interchanging two addition terms, or interchanging two multiplication terms, or moving a term from the left side of an equation or inequality to the right side after changing the plus or minus sign thereof, or moving a term from the right side of an equation or inequality to the left side after changing the plus or minus sign thereof, or the like). Mathematical expressions, mathematical equations, or mathematical inequalities before and after the simplification or transformation or rewriting may be considered to be equivalent to each other.

It should be understood that the above-described embodiments of the present invention may be implemented by software, hardware, or a combination of software and hardware. For example, various components in the user equipment in the above embodiments may be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present invention, the term "base station" may refer to a mobile communication data and/or control switching center having a certain transmission power and a certain coverage area, and, for example, having functions such as resource allocation and scheduling, and data reception and transmission. The term "user equipment" may refer to user mobile terminals, such as terminal devices that can wirelessly communicate with a base station or a micro base station, including a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., a CD-ROM), a flexible disk, or a hard disk, and the like, or other media such as firmware or micro codes on one or more ROM or RAM or PROM chips, or a downloadable software image, a shared database, and the like in one or more modules. Software or firmware or such configuration may be installed on a computing device such that one or more processors in the computing device performs the technical solutions described in the embodiments of the present invention.

In addition, each functional module or each feature of the user equipment used in each of the above embodiments may be implemented or executed by a circuit, the circuit is usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, discrete hardware components, or any combination of the above devices. The general-purpose processor may be a microprocessor, or the processor may be an existing processor, a controller, a microcontroller, or a state machine. The aforementioned general-purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

**Claims**

1. A method performed by a user equipment (UE), **characterized by** comprising:

   receiving SCI, and
   determining COT sharing information indicated in the SCI, wherein
   frequency-domain information in the COT sharing information comprises one or more RB sets corresponding to a shared COT, wherein the one or more RB sets are one or more RB sets in which a frequency-domain resource allocated for a PSSCH associated with the SCI is located.

2. User equipment, comprising:

   a processor; and
   a memory storing instructions,
   wherein the instructions, when run by the processor, perform the method according to claim 1.

```
┌─────────────────────────────────┐
│                                 │        S101
│      Determine a TBS of a TB    │  ∿
│                                 │
└─────────────────────────────────┘
                 │
                 ▼
┌─────────────────────────────────┐
│                                 │        S103
│  Perform one or more operations │  ∿
│      related to the TB          │
└─────────────────────────────────┘
```

# FIG. 1

```
┌─────────────────────────────────┐
│                                 │        S201
│          Receive SCI            │  ∿
│                                 │
└─────────────────────────────────┘
                 │
                 ▼
┌─────────────────────────────────┐
│                                 │        S203
│  Determine a TBS of a TB        │  ∿
│  carried in a PSSCH             │
│  scheduled by the SCI           │
└─────────────────────────────────┘
```

# FIG. 2

Acquire COT sharing information — S301

Perform one or more operations related to COT sharing according to the COT sharing information and/or other information — S303

FIG. 3

UE40

Processor 401

Memory 402

FIG. 4

## INTERNATIONAL SEARCH REPORT

| International application No. |
| --- |
| **PCT/CN2023/122423** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC：H04L H04W

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 侧行链路控制信息, 信道占用时间, 共享, 资源块, 物理侧行链路共享信道, SCI, COT, share, RB, PSSCH

### C. DOCUMENTS CONSIDERED TO BE RELEVANT

| Category* | Citation of document, with indication, where appropriate, of the relevant passages | Relevant to claim No. |
| --- | --- | --- |
| X | CN 114424640 A (QUALCOMM INC.) 29 April 2022 (2022-04-29) <br> description, paragraphs [0029]-[0182], and figures 1-13 | 1, 2 |
| A | CN 111867092 A (SHARP CORP.) 30 October 2020 (2020-10-30) <br> entire document | 1, 2 |
| A | CN 112314006 A (MEDIATEK SINGAPORE PTE. LTD.) 02 February 2021 (2021-02-02) <br> entire document | 1, 2 |
| A | CN 115002787 A (HEFEI YIRUI COMMUNICATION TECHNOLOGY CO., LTD. et al.) 02 September 2022 (2022-09-02) <br> entire document | 1, 2 |
| A | US 2021136783 A1 (QUALCOMM INC.) 06 May 2021 (2021-05-06) <br> entire document | 1, 2 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 December 2023** | **11 December 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/122423**

| Patent document cited in search report | | | Publication date (day/month/year) | Patent family member(s) | | | Publication date (day/month/year) |
|---|---|---|---|---|---|---|---|
| CN | 114424640 | A | 29 April 2022 | EP | 4035468 | A1 | 03 August 2022 |
| | | | | US | 2021092783 | A1 | 25 March 2021 |
| | | | | US | 11672034 | B2 | 06 June 2023 |
| | | | | WO | 2021061880 | A1 | 01 April 2021 |
| CN | 111867092 | A | 30 October 2020 | | None | | |
| CN | 112314006 | A | 02 February 2021 | WO | 2020200267 | A1 | 08 October 2020 |
| | | | | US | 2022061041 | A1 | 24 February 2022 |
| CN | 115002787 | A | 02 September 2022 | | None | | |
| US | 2021136783 | A1 | 06 May 2021 | WO | 2021087034 | A1 | 06 May 2021 |
| | | | | EP | 4052407 | A1 | 07 September 2022 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New WI proposal: Support for V2V services based on LTE sidelink, 3GPP TSG RAN Meeting#70. *RP-152293*
- New WID on 3GPP V2X Phase 2, 3GPP TSG RAN Meeting#75. *RP-170798*
- New WID on New Radio Access Technology. *RP-170855*

- New WID on 5G V2X with NR sidelink. *RP-190766*
- WID revision: NR sidelink enhancement. *RP-201385*
- Revised WID on NR sidelink evolution. *RP-221938*